# EUROPEAN PATENT SPECIFICATION

(11) **EP 2 302 843 B1**
(45) Date of publication and mention of the grant of the patent: **23.08.2017**
(21) Application number: 09771961.1
(22) Date of filing: 26.06.2009
(51) Int. Cl.: H04L 12/70, H04L 12/869, H04L 12/861, H04L 12/54, H04L 12/873, H04L 12/863, H04L 12/935, H04L 12/937

(54) **METHOD AND DEVICE FOR PACKET SCHEDULING**
VERFAHREN UND EINRICHTUNG ZUM PAKETSCHEDULING
PROCÉDÉ ET DISPOSITIF DE PLANIFICATION DE PAQUET

(30) Priority: 30.06.2008 CN 200810129144
(43) Date of publication of application: 30.03.2011
(73) Proprietor: ZTE Corporation, Shenzhen, Guangdong 518057 (CN)
(72) Inventor: SUN, Mingshi, Guangdong 518057 (CN); YANG, Yi, Guangdong 518057 (CN); ZHANG, Zhiwei, Guangdong 518057 (CN); LI, Guodong, Guangdong 518057 (CN); HUANG, Wei, Guangdong 518057 (CN); LAI, Wei, Guangdong 518057 (CN)
(74) Representative: Vogel, Andreas
(86) International application number: PCT/CN2009/072494
(87) International publication number: WO 2010/000191

(56) References cited:
- EP-A1- 1 670 193
- EP-A2- 1 193 922
- WO-A2-2007/125527
- CN-A- 1 826 768
- US-A1- 2003 227 926
- US-A1- 2004 090 974
- US-B1- 7 623 456
- US-B2- 7 120 160
- SCHOENEN R ET AL: "DISTRIBUTED CELL SCHEDULING ALGORITHMS FOR VIRTUAL-OUTPUT-QUEUED SWITCHES", 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999; [IEEE GLOBAL TELECOMMUNICATIONS CONFERENCE], NEW YORK, NY : IEEE, US, 5 December 1999 (1999-12-05), pages 1211-1215, XP001016905, DOI: 10.1109/GLOCOM.1999.829963 ISBN: 978-0-7803-5797-6
- CHARNY A ET AL: "Algorithms for providing bandwidth and delay guarantees in input-buffered crossbars with speedup", QUALITY OF SERVICE, 1998. (IWQOS 98). 1998 SIXTH INTERNATIONAL WORKSHO P ON NAPA, CA, USA 18-20 MAY 1998, NEW YORK, NY, USA,IEEE, US, 18 May 1998 (1998-05-18), pages 235-244, XP010280486, DOI: 10.1109/IWQOS.1998.675244 ISBN: 978-0-7803-4482-2

## Description

### Filed of the Invention

The present invention relates to packet transmission technology of networks, and in particular to a method and a device for packet scheduling.

### Background of the Invention

With the continuous development of communication technology, the operators need to satisfy omnibearing service requirements of users. From the current domestic telecom recombination and the convergence of the telecom network, broadcast and television network and mobile network, it can be seen that it is a general course of development to enable the operators to have ability of full service operations through the convergence of various services. This requires that one communication network must support multiple services, each of which, however, has different requirements on quality of service (QoS). The QoS refers to a series of service requests which need to be satisfied when the network transmits data stream and to a mechanism for realizing these service requests. These service requests can be evaluated by a series of indexes, such as bandwidth request, transmission delay, jitter, packet loss rate, and throughput and so on.

The QoS ability of a communication network is closely related to the packet scheduling mechanism used by the communication network. A communication network can be regarded as a very complicated queuing system, and a scheduling algorithm needs to be comprehensively considered in conjunction with the balance between complexity of implementation, delay and fairness, so as to achieve the object of improving network resource utilization efficiency while assuring the QoS.

To cope with the above challenges well, on one hand, the packet scheduling mechanism shall enable the operators to provide various differentiated services (based on service layer protocol) which are based on internet protocol (IP), such as voice over IP (VoIP), internet protocol TV (IPTV), and video, so as to provide a new profit growth opportunity to the operators; and on the other hand, the packet scheduling mechanism shall enable the operators to make full use of the existing network resources to realize service-based refined bandwidth management and distribution.

In the current packet scheduling mechanism, a scheduling structure of data promoting type is usually used, viz. performing the corresponding scheduling only when a packet reaches a scheduling node. With this scheduling structure, the scheduling is generally carried out in twice, i.e. scheduling at an input side and scheduling at an output side. After scheduling the flow of a user, the input side transmits it to the output side, and the output side schedules and outputs the flow. The scheduling at the input side is described in detail as follows. The scheduling at the input side is performed generally on the basis of a queue, and according to levels. At present, a common design generally supports 3-5 levels. The scheduling principles for different levels are substantially the same. However, the more the levels are, the more flexible the scheduling is.

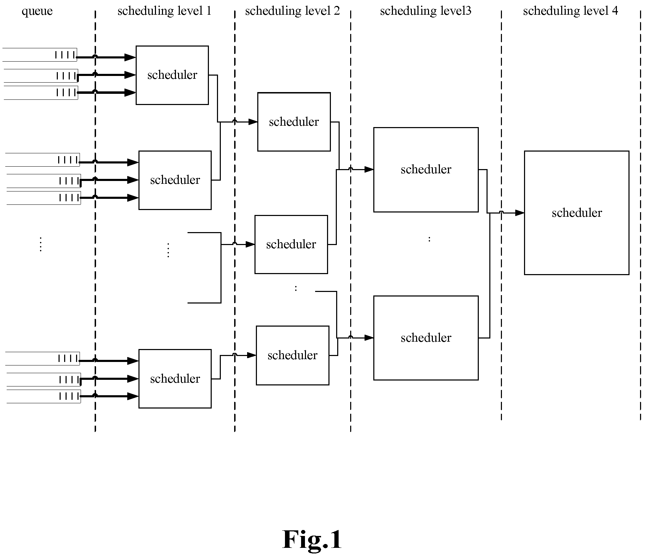

The scheduling at the input side is now described in detail with reference to the abstract model shown in Figure 1. The main functions and processing procedure of each part in the abstract module of the scheduling based on levels are described as follows.
A. An access network device perceives the type of a service: putting the packet in the corresponding queue according to different users and different service types such as VoIP, IPTV data service, and the like.
   Moreover, the access network device can perform flow supervision and control to different packets according to requirements.
B. A first-level scheduling node is usually used to represent different users, and is used to directly obtain flow of the users. The first-level scheduling node performs corresponding flow supervision and control depending on the different service layer protocols signed by the scheduling nodes, and schedules the packets of the next level according to the result of flow limitation. Moreover, due to the different user priority, scheduling can be performed on users using corresponding scheduling algorithm such as strict priority (SP), weighted fair queuing (WFQ) and round-robin (RR), so as to firstly ensure the flow of users with higher priority, and distribute the remaining flow among the users with a same priority.
C. The scheduling nodes of the second and third levels are connected with the nodes of the next level, which can usually represent the device of an access layer that has certain bandwidth limitation. Each scheduling node schedules the packet of its next level according to the requirements of its previous level, and can perform corresponding flow control and scheduling depending on the different corresponding bandwidth. The scheduling nodes of the second and third levels shall also support the basic scheduling algorithm.
D. The scheduling node of the forth-level is located at the highest level of the scheduling model, which can be used to represents the actual egress port of the device, and can be used for performing flow control according to the configuration condition of the egress port, and it also supports multiple scheduling algorithms so as to select a suitable message from different lower-level nodes.

The scheduling method of data promoting type is in simple configuration and uses a relatively large number of nodes. However, as the level of the scheduling is fixed, there exists a problem of low flexibility. Meanwhile, with this scheduling method, the scheduling can be performed only after the flow reaches the scheduling node. Moreover, the scheduling at the input side fails to take network congestion degree into account. Thus, all the flow at the input side will be scheduled and transmitted to the output side to buffer and wait for the output side to perform scheduling and outputting, which may not only lead to the congestion of the scheduling at the output side so that the input side and the output side cannot cooperate smoothly with each other, but also greatly consume hardware logic resources at the output side. In addition, as the level of the scheduling is fixed and not configurable, the support for various standards is limited, and only limited QoS can be assured.

Patent US7623456B1; WO2007/125527A2; US2004/090974A1; EP1670193A1; EP1193922A2; SCHOENEN R ET AL:"DISTRIBUTED CELL SECHEDULING ALGORITHMS FOR VIRTUAL-OUTPUT-QUEUED SWITCHES" 1999 IEEE GLOBAL TELECOMMUNICATIONS CONFERENCE; and CHARNY A ET AL:"Algorithms for providing bandwidth and delay guarantees in input-buffered crossbars with speedup" QUALITY OF SERVICE,1998 involve related technologies. However, the above mentioned problem still remains unsolved.

### Summary of the Invention

In view of the above, the present invention mainly aims at providing a method and a device for packet scheduling, which can realize distributed scheduling on virtual output queue (VOQ), enables flexible scheduling, and saves the hardware logic resources.

To achieve the above object, according to one aspect of the present invention, a method for packet scheduling is provided.

The method for packet scheduling according to the present invention comprises:
A. buffering a received packet into a corresponding virtual output queue (VOQ) according to a class of service (CoS) and a destination contained in a header of the packet;
B. generating a grant for each VOQ respectively according to the number of the packets in each VOQ and network congestion degree, and distributing the grant to the VOQ;
C. performing packet scheduling and dequeuing by each VOQ according to the grant; and
D. performing a round-robin scheduling according to the priority of the dequeued packet, and then scheduling and outputting the packet.

Wherein allocating a grant for each VOQ respectively according to the number of the packets in each VOQ and network congestion degree particularly comprises:
firstly, generating a state signal by each VOQ according to the number of packets of its own; and
secondly, generating the grant for each VOQ respectively according to the state signal and the network congestion degree.

Preferably, the distributing process particularly comprises:
A1. establishing a network model satisfying service application according to an application scene and a service layer protocol, configuring a connection relation between a scheduling unit and a scheduling channel according to the network model, and establishing scheduling levels matching with levels of the network model;
B1. distributing, layer by layer, the generated grant in the scheduling levels through the scheduling unit and the scheduling channel, down to a lowest scheduling level of the scheduling levels; and
C1. distributing, by the scheduling unit in the lowest scheduling level, the grants to respective VOQs.

To achieve the above object, according to another aspect of the present invention, a method for distributing grant is provided.

The method for distributing grant according to the present invention comprises:
a. establishing a network model satisfying service application according to an application scene and a service layer protocol, configuring a connection relation between a scheduling unit and a scheduling channel according to the network model, and establishing scheduling levels matching with levels of the network model;
b. distributing, layer by layer, a generated grant in the scheduling levels through the scheduling unit and the scheduling channel, down to a lowest scheduling layer of the scheduling levels; and
c. distributing, by the scheduling unit in the lowest scheduling level, the grants to respective VOQs.

To achieve the above object, according to still another aspect of the present invention, a device for implementing packet scheduling is provided.

The device for implementing packet scheduling according to the present invention comprises: an enqueuing management module, a VOQ, a queue state management module, a scheduling module, a grant scheduling module, and an output module, wherein,
the enqueuing management module is configured to receive packets, and buffer the received packets into corresponding VOQs according to a CoS and a destination contained in a header of each packet;
the VOQ is configured to buffer the packets, and to output the corresponding packets when the scheduling module performs packet scheduling;
the queue state management module is configured to generate a state signal that reflects the number of the packets of a queue according to the number of the packets stored in each VOQ, and to transmit the state signal to the grant scheduling module; the queue state management module is also configured to receive grants distributed by the grant scheduling module, to compare the grant of each VOQ and the number of the packets in the VOQ, wherein when it is determined that a packet is allowed to dequeue, it transmits a corresponding dequeuing allowance signal to the scheduling module;
the scheduling module is configured to perform, according to the priority of a VOQ, a round-robin scheduling on the packets in the corresponding VOQ, after receiving the dequeuing allowance signal, and then, to send out the packets obtained by scheduling; and
the grant scheduling module is configured to generate the grants for each VOQ according to the state signal and network congestion degree, and to distribute the grants to the corresponding queue state management module.

Preferably, the device further comprises:
an output module, configured to receive the packets distributed from the scheduling module, buffer the received packets, and schedule and output the packets.

Preferably, the grant scheduling module further comprises: a grant generating module, a scheduling unit, and a scheduling channel, wherein,
the grant generating module is configured to generate the grant, and to transmit the grant to the corresponding scheduling unit;
the scheduling unit is configured to transmit the received grant to the corresponding scheduling unit in a lower level with respect to itself; and also to distribute the grant to the corresponding VOQ when the scheduling unit is a lowest scheduling unit; and
the scheduling channel is configured to transmit the grant between the scheduling units; and also to transmit the grant transmitted by the lowest scheduling unit to the queue state management module.

The scheduling module can be further configured to perform slicing processing on the packets that need to be transmitted to the output module, and to transmitting data cells obtained to the output module.

Correspondingly, the output module is further configured to recombine the data cells received, and to buffer the packets obtained by the recombination.

Preferably, the output module further comprises:
a packet recombination module, configured to recombine the data cells received, and to transmit the packets obtained by the recombination to a scheduling output module; and
the scheduling output module, configured to buffer the packets, and schedule and output the packets.

To achieve the above object, according to still another aspect of the present invention, a device for implementing grant distribution is provided.

The device for implementing grant distribution according to the present invention comprises: a grant generating module, a scheduling unit, and a scheduling channel, wherein,
the grant generating module is configured to generate a grant, and transmit the grant to the corresponding scheduling unit;
the scheduling unit is configured to transmit the received grant to the corresponding scheduling unit in a lower level with respect to itself; and also to distribute the grant to the corresponding VOQ when the scheduling unit is a lowest scheduling unit; and
the scheduling channel is configured to transmit the grant between the scheduling units; and also to transmit the grant transmitted by the lowest scheduling unit to a corresponding VOQ.

In the method and device for packet scheduling provided by the present invention, packets are stored in the VOQ, when scheduling the packets, the packets in the VOQ are scheduled by distributing a grant to the VOQ, it is not necessary that the packets reach respective scheduling nodes so as to finish scheduling. Instead, packet scheduling is performed by distributing the grant to the VOQ layer by layer, which realizes distributed scheduling for the VOQ.

Moreover, through the present invention, distribution levels for grants can be divided arbitrarily, arbitrary scheduling algorithm can be used, such that the scheduling process is more flexible. Besides, the present invention enables packet buffering and simple dequeuing and scheduling at the input side, and completion of generation and distribution of the grants according to state information of the VOQ and network congestion degree at the output side, such that the output side only needs to buffer partial packets that are scheduled and dequeued without buffering all the packets, which saves the hardware logic resources at the output side.

### Brief Description of the Accompanying Drawings

Figure 1 is a structural schematic diagram of an abstract model for the scheduling method at the input side according to the prior art;
Figure 2 is a flow chart of a method for packet scheduling according to an embodiment;
Figure 3 is a flow chart of a method for distributing grant according to an embodiment;
Figure 3a is a schematic diagram of a scheduling structure in a scheduling unit according to an embodiment;
Figure 4 is a structural schematic diagram of a device for implementing packet scheduling according to an embodiment; and
Figure 5 is a structural schematic diagram of a device for implementing grant distribution according to an embodiment.

### Detailed Description of the Embodiments

The basic concept of the present embodiments is as follows: a received packet is buffered into a corresponding VOQ according to the class of service (CoS) and the destination contained in the packet header; a grant is allocated for each VOQ respectively according to the number of packets in the VOQ and network congestion degree; and each VOQ performs packet scheduling and dequeuing according to the grant.

The implementation of the method and device for packet scheduling is now described in detail in conjunction with the embodiments and the accompanying drawings. It should be noted that the embodiments of the present application and the features of the embodiments can be combined with each other if there is no conflict.

According to an embodiment, a method for packet scheduling is provided.

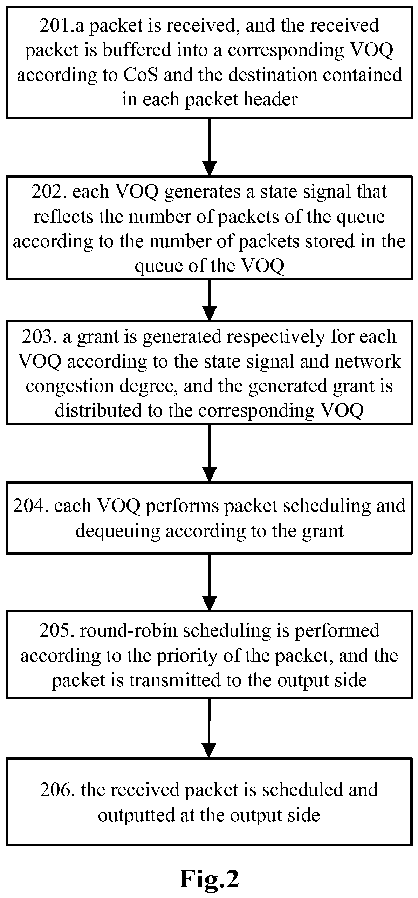

Figure 2 is a flow chart of the method for packet scheduling according to the present embodiment. The method for packet scheduling is divided into scheduling at the input side and scheduling at the output side, and the input side communicates with the output side through a switching network. As shown in Figure 2, the method comprises the following steps.

Step 201: a packet is received, and the received packet is buffered into a corresponding VOQ according to the CoS and the destination contained in each packet header.

The CoS indicates that the flow is divided into different classes, each of which can provide different characteristics of delay, jitter and packet loss.

Before performing the Step 201, different VOQs can be established according to the CoS and destination of the flow, such that after the packets are received, they can be distinguished from each other according to the CoS and the destination.

Step 202: each VOQ generates a state signal that reflects the number of packets of the queue according to the number of packets stored in the queue of itself.

In Step 202, the state signal may be classified as: normal state, buffer state, and empty state, which respectively represent that there are a large number of packets in the VOQ, that there are a small number of packets in the VOQ, and that there is no packet in the VOQ, wherein, in practice, it is possible to set two thresholds, A and B (A > B), for each VOQ, and when the VOQ needs to generate a state signal, the number of packets stored in the VOQ is compared with the two thresholds A and B, wherein when the number of packets is larger than or equal to A, the state signal is determined as the normal state; when the number of packets is between A and B, the state signal is determined as the buffer state, and when the number of packets is smaller than B, the state signal is determined as the empty state, such that the distinguishing between the three states is completed.

The thresholds for each VOQ can be set separately, or all the VOQs can be uniformly set with thresholds, which is not limited herein. However, the threshold is preferably configured according to the type of each VOQ.

Step 203: a grant is generated respectively for each VOQ according to the state signal and network congestion degree, and the generated grant is distributed to the corresponding VOQ.

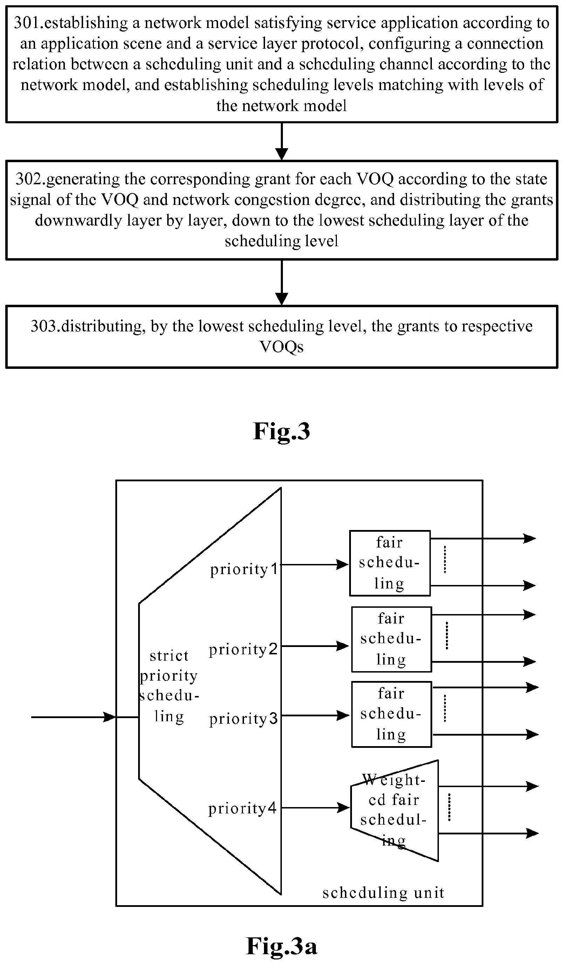

The process for distributing the grants to the VOQs may be implemented by relevant method in the prior art, or by the method for distributing grant shown in Figure 3.

Step 204: each VOQ performs packet scheduling and dequeuing according to the grant.

In the above, the above process of scheduling and outputting the packets can also be referred to as packet scheduling and dequeuing. The packet scheduling and dequeuing of each VOQ is determined by comparing the number of packets contained by the VOQ with the total number of bytes represented by the grant buffered in the VOQ. Each grant represents a certain number of bytes. If the total number of bytes represented by the grants accumulated in a certain VOQ is greater than the size of a packet in the header of the VOQ, the dequeuing of the packet is allowed. Packet scheduling and dequeuing cannot be performed if the grants buffered in the VOQ are not enough. The output bandwidth for each queue is decided by controlling the number of grants distributed to each VOQ.

In the step, the grants for each VOQ can be accomplished by maintaining a token bucket shaper for each VOQ. The grant distributed to each VOQ is stored in the corresponding token bucket shaper. When there are packets buffered in a VOQ and the number of the tokens buffered in the token bucket shaper is enough, scheduling on the VOQ is allowed.

Step 205: round-robin scheduling is performed according to the priority of the packet, and the packet is transmitted to the output side.

Step 206: the received packet is scheduled and outputted at the output side.

In the above, for the packet scheduling and outputting at the output side, it can be accomplished by using relevant technology in the prior art, and will not be described here anymore.

In Step 205 and Step 206, the process for transmitting the packet to the output side and finally scheduling and outputting the packet may be as follows: performing slicing processing on the packet, viz. slicing the packet into a number of data cells with a fixed size; routing the data cells to the output side through a switching network; correspondingly, at the output side, performing packet recombination according to the data cells, and buffering the recombined packet at the output side to wait for being scheduled and outputted.

As to the method shown in Figure 2, it is the general practice to perform packet enqueuing, packet storage in the VOQ and packet dequeuing and scheduling at the input side, and to perform grant generation and distribution, and packet scheduling and outputting at the output side. The input side and the output side communicate with each other through a switching network. That is, Step 201, Step 202, Step 204, and Step 205 are performed at the input side, while Step 203 and Step 206 are performed at the output side. And information interaction during the process of performing these steps, for example, the state information of the VOQ, grants generated for the VOQs, and packets transmitted to the output side are all transmitted through a switching network. In this way, it is not necessary for the packets to reach respective scheduling nodes at the input side to finish the scheduling. Instead, packet scheduling is performed by distributing grants to the VOQs layer by layer, which realizes distributed scheduling for the VOQ and saves the hardware logic resources at the output side.

In addition, when the state information and grants are transmitted through the switching network, cell headers can be added to the state information or the grants, and the transmission can be performed in the manner of state cell or grant cells.

According to an embodiment, a method for distributing grant is further provided.

Figure 3 is a flow chart of a method for distributing grant of the present embodiment. As shown in Figure 3, the method comprises:
Step 301: establishing a network model satisfying service application according to an application scene and a service layer protocol, configuring a connection relation between a scheduling unit and a scheduling channel according to the network model, and establishing scheduling levels matching with levels of the network model.

For example, for a metropolitan access network, it can be configured that each family corresponds to two queues, each building corresponds to a first-level scheduling layer, each community corresponds to a second-level scheduling layer, each street corresponds to a third-level scheduling layer, and each district corresponds to a fourth-level scheduling layer. If the fourth layer is set as a port layer, it is equivalent to establishing a four-layered scheduling structure.

Step 302: generating the corresponding grant for each VOQ according to the state signal of the VOQ and network congestion degree, and distributing the grants downwardly layer by layer, down to the lowest scheduling layer of the scheduling levels.

In the above, the distribution of the grants within a level is accomplished through a scheduling unit or a set of scheduling units, and the transmission of grants between different levels is accomplished through a scheduling channel. One or more scheduling units fulfill scheduling algorithm of one scheduling level, and are responsible for the distribution of grants within the level. When scheduling the grants, the scheduling unit may firstly schedule the grants entering the scheduling unit by using a strict priority scheduling manner, and then apply different scheduling manners to the grants according to different priorities, such as fair scheduling and weighted fair scheduling, and so on. With the above scheduling manner, the scheduling structure within the scheduling unit is as shown in Figure 3a. The scheduling channel interconnects the scheduling levels formed by the scheduling units, and transmits grants between the levels.

Step 303: distributing, by the lowest scheduling level, the grants to respective VOQs.

The lowest scheduling layer receives a request cell from the VOQ, and fulfills the distribution of grants according to the scheduling algorithm of the layer. Each grant after the distribution is outputted through the scheduling channel, is added with a cell header to form a grant cell, and is transmitted to the VOQ through a switching network.

According to an embodiment, a device for implementing packet scheduling is provided.

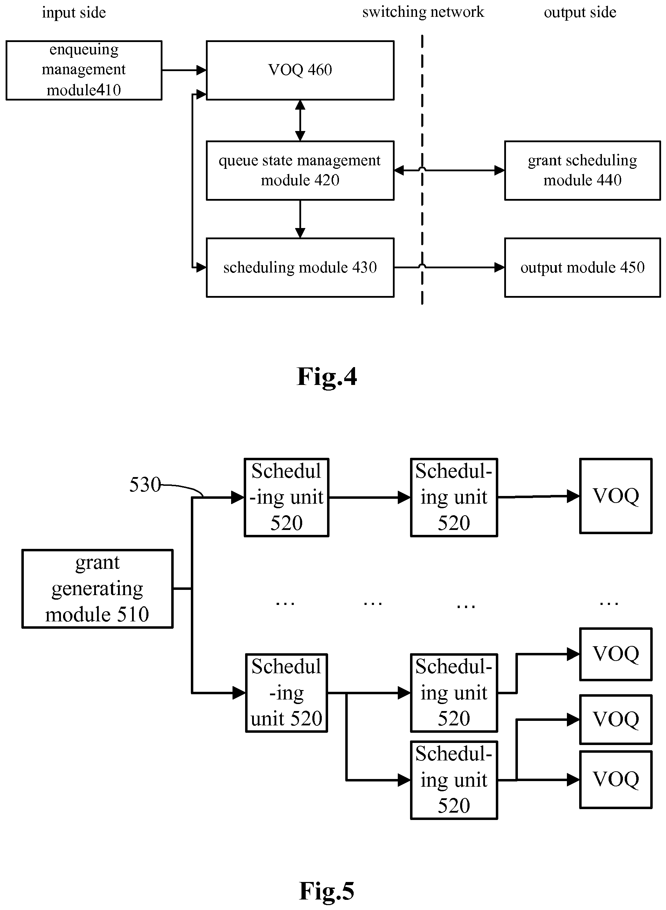

Figure 4 is a structural schematic diagram of a device for implementing packet scheduling of the present embodiment. As shown in Figure 4, the device comprises: an enqueuing management module 410, a queue state management module 420, a scheduling module 430, a grant scheduling module 440, and an output module 450, and a VOQ 460, wherein,
the enqueuing management module 410 is configured to receive packets, and buffer the received packets into corresponding VOQs 460 according to a CoS and a destination contained in a header of each packet.

As for the above, in practice, the enqueuing management module 410 can be equipped with additional functions, such as performing congestion management on the enqueuing packets. Specifically, the congestion management may be achieved by using algorithms such as weighted random early discard, head discard, and tail discard.

The queue state management module 420 is configured to generate a state signal that reflects the number of the packets of a queue according to the number of the packets stored in each VOQ 460, and to transmit the state signal to the grant scheduling module 440. Moreover, the queue state management module 420 is also configured to receive grants distributed by the grant scheduling module 440, to compare the grant of each VOQ 460 and the number of the packets in the VOQ 460, wherein when it is determined that a packet is allowed to dequeue, it transmits a dequeuing allowance signal to the scheduling module 430.

In the above, the implementation manner of the queue state management module 420 may be as follows: establishing a database to maintain and output the state of each VOQ 460; maintaining a token bucket shaper for each VOQ 460, storing the grant transmitted from the grant scheduling module 440 into the corresponding token bucket shaper upon receiving the same; and with the packets only buffered in the VOQ 460, outputting the corresponding dequeuing allowance signal to the scheduling module 430 when the number of the tokens buffered in the corresponding token bucket shaper is enough.

In the device of the present embodiment, the number of the queue state management modules 420 is not less than one.

In the above, when the state signal is transmitted to the grant scheduling module 440, it is possible to add a cell header to the state signal and complete the transmission in the manner of a request cell; and similarly, it is also possible to add a cell header to the grant of each queue state management modules 420 and complete the transmission in the manner of a grant cell.

The scheduling module 430 is configured to perform, according to the priority of a VOQ 460, a round-robin scheduling on the packets in the corresponding VOQ 460, after receiving the above dequeuing allowance signal, and then, send the packets obtained by the scheduling to the output module 450.

The implementation of the scheduling module 430 may comprise: the scheduling module 430 establishes one VOQ list according to the scheduling and dequeuing allowance signal, the list is a set of VOQs which satisfy the condition of packet dequeuing, and the scheduling module 430 realizes packet scheduling according to the list.

The grant scheduling module 440 is configured to generate the grants for each VOQ 460 according to the state signal and network congestion degree, and distribute the grants to the corresponding queue state management module 420.

The output module 450 is configured to buffer the obtained packets, and schedule and output the packets.

VOQ 460 is configured to buffer the packets, and output the corresponding packets when the scheduling module 430 performs packet scheduling.

In the device shown in Figure 4, the packets can be transmitted to the output module 450 in the manner of cells, viz. the scheduling module 430 performs slicing processing on the packets that need to be transmitted, so as to obtain data cells, and transmits the data cells to the output module 450. Correspondingly, the output module 450 is further configured to recombine the received data cells and buffer the packets obtained by the recombination. Here, the output module 450 can further be divided into two modules: a packet recombination module and a scheduling output module, wherein,
the packet recombination module is configured to recombine the data cells received, and transmit the packets obtained by the recombination to a scheduling output module;
the scheduling output module is configured to buffer the packets, and schedule and output the packets.

As to the device for implementing packet scheduling shown in Figure 4, it is the general practice to place the enqueuing management module 410, the queue state management module 420 and the scheduling module 430 at the input side, and the grant scheduling module 440 and the output module 450 at the output side, and the input side and the output side communicate with each other through a switching network.

According to an embodiment, a device for implementing grant distribution is provided.

Figure 5 is a structural schematic diagram of a device for implementing grant distribution. The device can be used in the device shown in Figure 4 as the grant scheduling module 440 therein. As shown in Figure 5, the device comprises: a grant generating module 510, a scheduling unit 520, and a scheduling channel 530, wherein,
the grant generating module 510 is configured to generate grants, and transmit the grants to the corresponding scheduling units 520;
the scheduling unit 520 is configured to transmit the received grants to the corresponding scheduling unit 520 in a lower level with respect to itself; and also to distribute the grants to the corresponding VOQs when the scheduling unit 520 is a lowest scheduling unit;
the scheduling channel 530 is configured to transmit the grants between the scheduling units 520; and also to transmit the grants transmitted by the lowest scheduling unit 520 to different VOQs.

In the above, transmitting the grants to different VOQs mentioned above is only used to represent the mapping relation between the grants distributed by the lowest scheduling unit and the VOQs. In practical application, according to different devices or modules for managing the grant of VOQ, the grant for each VOQ is correspondingly transmitted to the device or module managing the grant of the VOQ. For example, when the device shown in Figure 5 is used as the grant scheduling module 440 in the device shown in Figure 4, since in Figure 4, it is the queue state management module 420 to manage the grant of VOQ, the scheduling channel 530 will transmit the grant transmitted by the lowest scheduling unit 520 to the queue state management module 420.

In the above, a certain number of scheduling units form one scheduling level. The number of the scheduling units and the number of the scheduling levels can be set according to specific situation, which is not limited here. For example, in the example in Step 301, the scheduling levels are divided into four layers.

As mentioned above, with the technical solution provided in the embodiments, packets are stored in the VOQs, wherein when scheduling the packets, the packets in the VOQs are scheduled by distributing grants to the VOQs. It is not necessary for the packets to reach respective scheduling nodes so as to finish scheduling. Instead, packet scheduling is performed by distributing grants to the VOQs layer by layer, which realizes distributed scheduling for the VOQs. Moreover, with the present invention, distribution levels for grants can be divided arbitrarily, and arbitrary scheduling algorithm can be used such that the scheduling process is more flexible. Besides, with the present invention, it is possible to buffer packets and perform simple dequeuing and scheduling at the input side, and the generation and distribution of the grants are fulfilled at the output side according to state information of the VOQ and network congestion degree, such that the output side only needs to buffer partial packets that are scheduled and dequeued without buffering all the packets, which saves the hardware logic resources at the output side.

## Claims

1. A method for packet scheduling, **characterized in that** the method comprises the steps of :
A. buffering a received packet into a corresponding virtual output queue (VOQ) according to a class of service (CoS) and a destination contained in a header of the packet;
B. generating a grant for each VOQ respectively according to the number of the packets in each VOQ and network congestion degree, and distributing the grant to the VOQ;
C. performing packet scheduling and dequeuing by each VOQ according to the grant; and
D. performing a round-robin scheduling according to the priority of the dequeued packet, and then scheduling and outputting the packet;
wherein allocating a grant for each VOQ respectively according to the number of the packets in each VOQ and network congestion degree particularly comprises:
firstly, generating a state signal by each VOQ according to the number of its own packets; and
secondly, generating the grant for each VOQ respectively according to the state signal and the network congestion degree.

2. The method according to Claim 1, **characterized in that** the distributing process particularly comprises the steps of :
A1. establishing a network model satisfying service application according to an application scene and a service layer protocol, configuring a connection relation between a scheduling unit and a scheduling channel according to the network model, and establishing scheduling levels matching with levels of the network model;
B1. distributing, layer by layer, the generated grant in the scheduling levels through the scheduling unit and the scheduling channel, down to a lowest scheduling level of the scheduling levels; and
C1. distributing, by the scheduling unit in the lowest scheduling level, the grants to respective VOQs.

3. A device for implementing packet scheduling, **characterized in that** the device comprises: an enqueuing management module, a VOQ, a queue state management module, a scheduling module, a grant scheduling module, and an output module, wherein,
the enqueuing management module (410) is configured to receive packets, and buffer the received packets into corresponding VOQs (460) according to a CoS and a destination contained in a header of each packet;
the VOQ (460) is configured to buffer the packets, and to output the corresponding packets when the scheduling module (430) performs packet scheduling;
the queue state management module (420) is configured to generate a state signal that reflects the number of the packets of a queue according to the number of the packets stored in each VOQ, and to transmit the state signal to the grant scheduling module (440); the queue state management module is also configured to receive grants distributed by the grant scheduling module (440), to compare the grant of each VOQ and the number of the packets in the VOQ, wherein when it is determined that a packet is allowed to dequeue, it transmits a corresponding dequeuing allowance signal to the scheduling module (430);
the scheduling module (430) is configured to perform, according to the priority of a VOQ, a round-robin scheduling on the packets in the corresponding VOQ, after receiving the dequeuing allowance signal, and then, to send out the packets obtained by scheduling; and
the grant scheduling module (440) is configured to generate the grants for each VOQ according to the state signal and network congestion degree, and to distribute the grants to the corresponding queue state management module (420).

4. The device according to Claim 3, **characterized in that** the device further comprises:
an output module, configured to receive the packets distributed from the scheduling module, buffer the received packets, and schedule and output the packets.

5. The device according to Claim 3 or 4, **characterized in that** the grant scheduling module further comprises: a grant generating module (510), a scheduling unit (520), and a scheduling channel, wherein,
the grant generating module (510) is configured to generate the grant, and to transmit the grant to the corresponding scheduling unit (510);
the scheduling unit (520) is configured to transmit the received grant to the corresponding scheduling unit in a lower level with respect to itself; and also to distribute the grant to the corresponding VOQ when the scheduling unit is a lowest scheduling unit; and
the scheduling channel is configured to transmit the grant between the scheduling units; and also to transmit the grant transmitted by the lowest scheduling unit to the queue state management module.

6. The device according to Claim 3 or 4, **characterized in that** the scheduling module is further configured to perform slicing processing on the packets that need to be transmitted to the output module, and to transmitting data cells obtained to the output module; and
correspondingly, the output module is further configured to recombine the data cells received, and to buffer the packets obtained by the recombination.

7. The device according to Claim 6, **characterized in that** the output module further comprises:
a packet recombination module, configured to recombine the data cells received, and to transmit the packets obtained by the recombination to a scheduling output module; and
the scheduling output module, configured to buffer the packets, and schedule and output the packets.

## Patentansprüche

1. Verfahren zur Paketzeitplanung, **dadurch gekennzeichnet, dass** das Verfahren die Schritte umfasst:
A. Puffern eines empfangenen Pakets in einer entsprechenden virtuellen Ausgabewarteschlange (Virtual Output Queue, VOQ) gemäß einer Dienstklasse (Class of Service, CoS) und einem Ziel, das in einem Header des Pakets enthalten ist;
B. Erzeugen jeweils einer Genehmigung für jede VOQ gemäß der Anzahl der Pakete in jeder VOQ und einem Grad eines Netzstaus und Verteilen der Genehmigung zu der VOQ;
C. Durchführen einer Paketzeitplanung und Abbauen der Warteschlange durch jede VOQ gemäß der Genehmigung; und
D. Durchführen einer Round-Robin-Zeitplanung gemäß dem Vorrang des in der Warteschlange abgebauten Pakets und anschließendes zeitliches Planen und Ausgeben des Pakets;
wobei ein Zuteilen einer jeweiligen Genehmigung für jede VOQ gemäß der Anzahl der Pakete in jeder VOQ und dem Grad eines Netzstaus insbesondere Folgendes aufweist:
erstens, Erzeugen eines Zustandssignals durch jede VOQ gemäß der Anzahl ihrer eigenen Pakete; und
zweitens, Erzeugen der jeweiligen Genehmigung für jede VOQ gemäß dem Zustandssignal und dem Grad eines Netzstaus.

2. Verfahren nach Anspruch 1, **dadurch gekennzeichnet, dass** der Zuteilungsvorgang insbesondere die Schritte beinhaltet:
A1. Erstellen eines Netzwerkmodells, das einer Dienstanwendung gemäß einer Anwendungsszene und einem Dienstschichtprotokoll genügt, Konfigurieren einer Verbindungsbeziehung zwischen einer Zeitplanungseinheit und einem Zeitplanungskanal gemäß dem Netzwerkmodell, und Erstellen von Zeitplanungsstufen, die Stufen des Netzwerkmodells entsprechen;
B1. Zuteilen der erzeugten Genehmigung in den Zeitplanungsstufen durch die Zeitplanungseinheit und den Zeitplanungskanal Schicht für Schicht bis auf eine niedrigste Zeitplanungsstufe der Zeitplanungsstufen herunter; und
Cl. Zuteilen der Genehmigungen zu entsprechenden VOQs durch die Zeitplanungseinheit in der niedrigsten Zeitplanungsstufe.

3. Vorrichtung zur Implementierung einer Paketzeitplanung, **dadurch gekennzeichnet, dass** die Vorrichtung aufweist: ein Einreihungsverwaltungsmodul, eine VOQ, ein Warteschlangenzustandsverwaltungsmodul, ein Zeitplanungsmodul, ein Genehmigungszeitplanungsmodul und ein Ausgabemodul, wobei
das Einreihungsverwaltungsmodul (410) dazu eingerichtet ist, Pakete zu empfangen und die empfangenen Pakete gemäß einer CoS und einem Ziel, das in einem Header jedes Pakets enthalten ist, in entsprechenden VOQs (460) zu puffern;
die VOQ (460) dazu eingerichtet ist, die Pakete zu puffern und die entsprechenden Pakete auszugeben, wenn das Zeitplanungsmodul (430) die Paketzeitplanung durchführt;
das Warteschlangenzustandsverwaltungsmodul (420) dazu eingerichtet ist, ein Zustandssignal zu erzeugen, das die Zahl der Pakete einer Warteschlange gemäß der Anzahl der Pakete kennzeichnet, die in jeder VOQ gespeichert sind, und das Zustandssignal zu dem Genehmigungszeitplanungsmodul (440) zu senden; das Warteschlangenzustandsverwaltungsmodul ferner dazu eingerichtet ist, Genehmigungen zu empfangen, die durch das Genehmigungszeitplanungsmodul (440) zugeteilt sind, um die Genehmigung jeder VOQ und die Zahl der Pakete in der VOQ zu vergleichen, wobei es ein entsprechendes Warteschlangenabbauerlaubnissignal zu dem Zeitplanungsmodul (430) sendet, wenn ermittelt ist, dass der Abbau eines Paket in der Warteschlange erlaubt ist,;
das Zeitplanungsmodul (430) dazu eingerichtet ist, nach einem Empfang des Warteschlangenabbauerlaubnissignals gemäß dem Vorrang einer VOQ eine Round-Robin-Zeitplanung an den Paketen in der entsprechenden VOQ durchzuführen und anschließend die durch die Zeitplanung gewonnenen Pakete zu senden; und
das Genehmigungszeitplanungsmodul (440) dazu eingerichtet ist, die Genehmigungen für jede VOQ gemäß dem Zustandssignal und dem Grad eines Netzstaus zu erzeugen und die Genehmigungen dem entsprechenden Warteschlangenzustandsverwaltungsmodul (420) zuzuteilen.

4. Vorrichtung nach Anspruch 3, **dadurch gekennzeichnet, dass** die Vorrichtung ferner enthält:
ein Ausgabemodul, das dazu eingerichtet ist, die Pakete, die von dem Zeitplanungsmodul zugeteilt sind, zu empfangen, die empfangenen Pakete zu puffern und die Pakete zeitlich zu planen und auszugeben.

5. Vorrichtung nach Anspruch 3 oder 4, **dadurch gekennzeichnet, dass** das Genehmigungszeitplanungsmodul ferner enthält:
ein Genehmigungserzeugungsmodul (510), eine Zeitplanungseinheit (520) und einen Zeitplanungskanal, wobei
das Genehmigungserzeugungsmodul (510) dazu eingerichtet ist, die Genehmigung zu erzeugen und die Genehmigung zu der entsprechenden Zeitplanungseinheit (510) zu senden;
die Zeitplanungseinheit (520) dazu eingerichtet ist, die empfangene Genehmigung zu der entsprechenden Zeitplanungseinheit in einer in Bezug auf sich selbst niedrigeren Stufe zu senden; und außerdem die Genehmigung der entsprechende VOQ zuzuteilen, wenn die Zeitplanungseinheit eine niedrigste Zeitplanungseinheit ist; und
der Zeitplanungskanal dazu eingerichtet ist, die Genehmigung zwischen den Zeitplanungseinheiten zu senden; und außerdem die Genehmigung, die durch die niedrigste Zeitplanungseinheit gesendet ist, zu dem Warteschlangenzustandsverwaltungsmodul zu senden.

6. Vorrichtung nach Anspruch 3 oder 4, **dadurch gekennzeichnet, dass** das Zeitplanungsmodul außerdem dazu eingerichtet ist, eine Schnittverarbeitung an den Paketen, die zu dem Ausgabemodul zu senden sind, durchzuführen und gewonnene Datenzellen zu dem Ausgabemodul zu senden; und
in Entsprechung das Ausgabemodul ferner dazu eingerichtet ist, die empfangenen Datenzellen zu rekombinieren und die Pakete zu puffern, die durch die Rekombination gewonnen sind.

7. Vorrichtung nach Anspruch 6, **dadurch gekennzeichnet, dass** das Ausgabemodul ferner enthält:
ein Paketrekombinationsmodul, das dazu eingerichtet ist, die empfangenen Datenzellen zu rekombinieren und die durch die Rekombination gewonnenen Pakete zu einem Zeitplanungsausgabemodul zu senden; und
das Zeitplanungsausgabemodul, das dazu eingerichtet ist, die Pakete zu puffern und die Pakete zeitlich zu planen und auszugeben.

## Revendications

1. Procédé pour la programmation de paquets, **caractérisé en ce que** le procédé comprend les étapes de :
A. mise en tampon d'un paquet reçu dans une file d'attente de sortie virtuelle (Virtual Output Queue, VOQ) correspondante selon une classe de service (Class of Service, CoS) et une destination contenue dans un en-tête du paquet ;
B. génération d'une autorisation pour chaque VOQ respectivement selon le nombre des paquets dans chaque VOQ et le degré de congestion de réseau, et distribution de l'autorisation à la VOQ ;
C. exécution de la programmation du paquet et retrait de la file d'attente par chaque VOQ selon l'autorisation ; et
D. exécution d'une programmation en circuit cyclique selon la priorité du paquet retiré de la file d'attente, puis programmation et sortie du paquet ;
dans lequel l'allocation d'une autorisation pour chaque VOQ respectivement selon le nombre de paquets dans chaque VOQ et le degré de congestion du réseau comprend en particulier :
premièrement, la génération d'un signal d'état par chaque VOQ selon le nombre de ses propres paquets ; et
deuxièmement, génération de l'autorisation pour chaque VOQ respectivement selon le signal d'état et le degré de congestion du réseau.

2. Procédé selon la revendication 1, **caractérisé en ce que** le processus de distribution comprend particulièrement les étapes de :
A1. établissement d'un modèle de réseau satisfaisant une application de service selon une scène d'application et un protocole de couche de service, configurant une relation de connexion entre une unité de programmation et un canal de programmation selon le modèle de réseau et établissant des niveaux de programmation correspondant à des niveaux du modèle de réseau ;
B1. distribution, couche par couche, de l'autorisation générée dans les niveaux de programmation par l'unité de programmation et le canal de programmation, jusqu'à un niveau de programmation le plus bas des niveaux de programmation ; et
C1. distribution, par l'unité de distribution dans le niveau de programmation le plus bas, des autorisations vers les VOQ respectives.

3. Dispositif pour implémenter une programmation de paquets, **caractérisé en ce que** le dispositif comprend : un module de gestion de mise en file d'attente, une VOQ, un module de gestion d'état de file d'attente, un module de programmation, un module de programmation d'autorisation et un module de sortie, dans lequel,
le module de gestion de mise en file d'attente (410) est configuré pour recevoir des paquets, et mettre en tampon les paquets reçus dans des VOQ correspondantes (460) selon un CoS et une destination contenue dans un en-tête de chaque paquet ;
la VOQ (460) est configurée pour mettre les paquets en tampon, et pour sortir les paquets correspondants lorsque le module de programmation (430) effectue la programmation des paquets ;
le module de gestion d'état de file d'attente (420) est configuré pour générer un signal d'état qui reflète le nombre de paquets d'une file d'attente selon le nombre de paquets stockés dans chaque VOQ, et pour transmettre le signal d'état au module de programmation d'autorisation (440) ; le module de gestion d'état de file d'attente est également configuré pour recevoir des autorisations distribuées par le module de programmation d'autorisation (440), pour comparer l'autorisation de chaque VOQ et le nombre de paquets dans la VOQ, dans lequel lorsqu'il est déterminé qu'un paquet est autorisé à être retiré de la file d'attente, il transmet un signal de permission de retrait de la file d'attente au module de programmation (430) ;
le module de programmation (430) est configuré pour exécuter, selon la priorité d'une VOQ, une programmation en circuit cyclique sur les paquets dans la VOQ correspondante, après avoir reçu le signal de permission de retrait de la file d'attente, puis pour émettre les paquets obtenus par la programmation ; et
le module de programmation d'autorisation (440) est configuré pour générer les autorisations pour chaque VOQ selon le signal d'état et le degré de congestion du réseau, et pour distribuer les autorisations au module de gestion d'état de file d'attente (420) correspondant.

4. Dispositif selon la revendication 3, **caractérisé en ce que** le dispositif comprend en outre :
un module de sortie, configuré pour recevoir les paquets distribués du module de programmation, mettre en tampon les paquets reçus et programmer et sortir les paquets.

5. Dispositif selon la revendication 3 ou 4, **caractérisé en ce que** le module de programmation d'autorisation comprend en outre :
un module de génération d'autorisation (510), une unité de programmation (520) et un canal de programmation, dans lequel
le module de génération d'autorisation (510) est configuré pour générer l'autorisation, et pour transmettre l'autorisation à l'unité de programmation (510) correspondante ;
l'unité de programmation (520) est configurée pour transmettre l'autorisation reçue à l'unité de programmation correspondante dans un niveau inférieur par rapport à elle-même ; et également pour distribuer l'autorisation à la VOQ correspondante lorsque l'unité de programmation est une unité de programmation la plus inférieure ; et
le canal de programmation est configuré pour transmettre l'autorisation entre les unités de programmation et également pour transmettre l'autorisation transmise par l'unité de programmation la plus inférieure au module de gestion d'état de file d'attente.

6. Dispositif selon la revendication 3 ou 4, **caractérisé en ce que** le module de programmation est en outre configuré pour exécuter un traitement de mise en tranches sur les paquets qui nécessitent d'être transmis au module de sortie, et pour transmettre des cellules de données obtenues vers le module de sortie ; et
de manière correspondante, le module de sortie est en outre configuré pour recombiner les cellules de données reçues, et pour mettre en tampon les paquets obtenus par la recombinaison.

7. Dispositif selon la revendication 6, **caractérisé en ce que** le module de sortie comprend en outre :
un module de recombinaison de paquet, configuré pour recombiner les cellules de données reçues, et pour transmettre les paquets obtenus par la recombinaison vers un module de sortie de programmation ; et
le module de sortie de programmation, configuré pour mettre les paquets en tampon, et programmer et sortir les paquets.
